# FASCICULE DE BREVET EUROPEEN

(11) **EP 1 727 170 B1**
(45) Date de publication et mention de la délivrance du brevet: **11.11.2009**
(21) Numéro de dépôt: 06290684.7
(22) Date de dépôt: 28.04.2006
(51) Int. Cl.: H01H 9/18, H01H 13/02, H01H 23/02

(54) **Appareillage électrique comprenant une plaque enjoliveur à fonction lumineuse**
Elektrisches Schaltgerät inklusive Abdeckplatte mit Lichtfunktion
Electric device comprising a cover plate with an illuminating function

(30) Priorité: 25.05.2005 FR 0505252
(43) Date de publication de la demande: 29.11.2006
(73) Titulaire: Legrand France, 87000 Limoges (FR); Legrand SNC, 87000 Limoges (FR)
(72) Inventeur: Belet, Tony, 87000 Limoges (FR); Janicot, Laurent, 87110 Solignac (FR); Maneyrol, Emmanuel, 87120 Sainte Anne Saint Priest (FR); Mourgaud, Jean-François, 87220 Feytiat (FR)
(74) Mandataire: Orsini, Fabienne

(56) Documents cités:
- EP-A- 1 385 185
- EP-A- 1 389 788
- WO-A-03/067148
- WO-A-03/071565
- DE-U1- 20 019 668
- US-A- 4 514 789
- US-A1- 2004 000 468

## Description

### DOMAINE TECHNIQUE AUQUEL SE RAPPORTE L'INVENTION

La présente invention concerne de manière générale les appareillages électriques qui comprennent un quelconque mécanisme d'appareillage, tel que par exemple un mécanisme d'interrupteur ou de prise de courant, rapporté dans une boîte à encastrer dans une paroi quelconque, dans un boîtier ou dans une goulotte électrique à rapporter en saillie d'une telle paroi.

Elle concerne en particulier appareillage électrique comprenant une plaque enjoliveur se présentant sous la forme d'un cadre qui entoure au moins une touche de commande accessible à l'usager pour l'actionnement d'au moins un mécanisme d'appareillage, et des moyens d'éclairement propres à l'éclairage d'une zone de façade dudit appareillage.

L'invention trouve une application particulièrement avantageuse dans la réalisation d'un interrupteur électrique à fonction lumineuse, visible dans la pénombre.

### ARRIERE-PLAN TECHNOLOGIQUE

On connaît déjà des documents FR 2 790 865, GB 2 083 708 et EP 1 467 387 des appareillages électriques du type précité qui intègrent une fonction lumineuse pour être repérés dans une pièce sombre et/ou indiquer à l'usager leur état de fonctionnement (ouvert ou fermé).

Dans ces appareillages électriques déjà connus, les moyens d'éclairement comprennent une source lumineuse (une diode ou une ampoule à filaments) disposées à l'intérieur du boîtier d'appareillage pour éclairer directement ou indirectement la touche de commande accessible à l'usager.

Cette source lumineuse est montée sur un support dédié et est raccordée électriquement au mécanisme d'appareillage.

En outre, dans ces appareillages électriques déjà connus, les moyens d'éclairement comprennent des moyens de guidage ou de réflexion de la lumière embarqués dans la touche de commande ou positionnés juste en dessous de cette touche de commande. Ces moyens de guidage ou de réflexion permettent soit de guider la lumière émise par la source lumineuse, soit d'accentuer le pouvoir lumineux de la source lumineuse sur une zone précise de la touche de commande.

En particulier, on connaît du document EP 1 385 185 un appareillage électrique dans lequel la plaque enjoliveur comporte en façade une zone d'écriture éclairée. Pour cela la plaque enjoliveur comporte sur un de ses côtés un logement pour un guide de lumière apte à guider la lumière émise par une source de lumière vers une feuille d'inscription rapportée en façade de ladite plaque. Ici, la source de lumière qui fait partie des moyens d'éclairement est logée dans le boîtier de l'appareillage.

On connaît également du document WO 03/071565 un appareillage électrique dont la façade porte des inscriptions éclairées. Pour cela, il est prévu en arrière de la façade un guide de lumière adapté à diffuser la lumière provenant d'une source de lumière externe, l'ensemble du guide de lumière et de la source de lumière étant placé dans le socle de l'appareillage.

De tels appareillages électriques présentent plusieurs inconvénients.

Tout d'abord, les moyens d'éclairement de ces appareillages électriques sont complexes à monter dans le boîtier d'appareillage et ils ne sont pas accessoirisables.

En outre, dans de tels appareillages, la source lumineuse des moyens d'éclairement est difficilement accessible dans le boîtier d'appareillage. Ainsi, il est notamment difficile de récupérer une partie substantielle du flux lumineux émis par la source lumineuse pour la guider jusqu'à la touche de commande ou la plaque enjoliveur afin d'obtenir un éclairage correct de celle-ci.

Enfin de tels moyens d'éclairement ne permettent pas de former un halo de lumière autour de l'appareillage électrique correspondant.

Par ailleurs, le document DE 200 19 668 décrit un appareillage électrique complexe dans lequel la plaque enjoliveur et le support d'appareillage sont assemblés et positionnés sur une plaque frontale éclairée en façade au moyen de diodes montées sur une sous plaque pour canaliser le flux lumineux émis vers l'avant dudit appareillage.

### OBJET DE L'INVENTION

Afin de remédier aux inconvénients précités de l'état de la technique la présente invention propose un appareillage électrique selon la revendication 1.

Avantageusement, dans l'appareillage électrique selon l'invention, les moyens d'éclairement peuvent être accessoirisés du fait qu'ils sont totalement embarqués sur la plaque enjoliveur. Le montage de ces moyens d'éclairement sur la plaque enjoliveur est aisé.

En outre l'éclairement de la tranche de la plaque enjoliveur permet avantageusement de former un halo de lumière autour de l'appareillage électrique selon l'invention.

D'autres caractéristiques non limitatives et avantageuses de l'appareillage électrique selon l'invention sont les suivantes :
- lesdits moyens d'éclairement sont rapportés sur la face arrière de ladite plaque enjoliveur ;
- lesdits moyens d'éclairement sont logés dans l'épaisseur de ladite plaque enjoliveur ;
- ledit guide optique présente sur sa tranche des stries pour diffuser la lumière ;
- ledit guide optique est réalisé en matière plastique moulée comme du polycarbonate transparent ou du polymétacrylate de méthyle acrylonitrile transparent ;
- ladite source lumineuse comprend des diodes électroluminescentes raccordées à un circuit imprimé ;
- ledit guide optique comporte des moyens de montage d'une plaque support dudit circuit imprimé ;
- ledit circuit imprimé est alimenté en courant par de conducteurs électriques connectés aux bornes de connexion du mécanisme d'appareillage ;
- ledit circuit imprimé est alimenté en courant par des accumulateurs d'énergie logés dans ladite plaque enjoliveur ;
- ledit circuit imprimé est alimenté en courant par un système à induction ;
- ladite plaque enjoliveur comporte une partie de façade opaque et une partie arrière translucide formant au moins une partie de la tranche de la plaque enjoliveur ;
- la partie arrière translucide est rapportée sur la face arrière de la partie de façade opaque ;
- la partie arrière translucide est surmoulée sur la partie de façade opaque ;
- la partie de façade s'étend sur un côté de la plaque enjoliveur, ladite partie arrière translucide formant les trois autres côtés de ladite plaque enjoliveur ;
- ladite partie de façade opaque est réalisée en matière métallique ;
- ladite partie arrière est réalisée en matière plastique moulée.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique éclatée en perspective d'un premier mode de réalisation d'un appareillage électrique selon l'invention ;
- la figure 2 est une vue assemblée en perspective de la figure 1 ;
- la figure 3 est une vue en perspective éclatée des moyens d'éclairement de l'appareillage électrique de la figure 1 ;
- la figure 4 est une vue identique à celle de la figure 3 coupée selon un plan médian ;
- la figure 5 est une vue schématique de dessous des moyens d'éclairement de la figure 3 avec un premier moyen d'alimentation électrique ; et
- la figure 6 est une vue schématique de dessous des moyens d'éclairement de la figure 3 avec un deuxième moyen d'alimentation électrique.

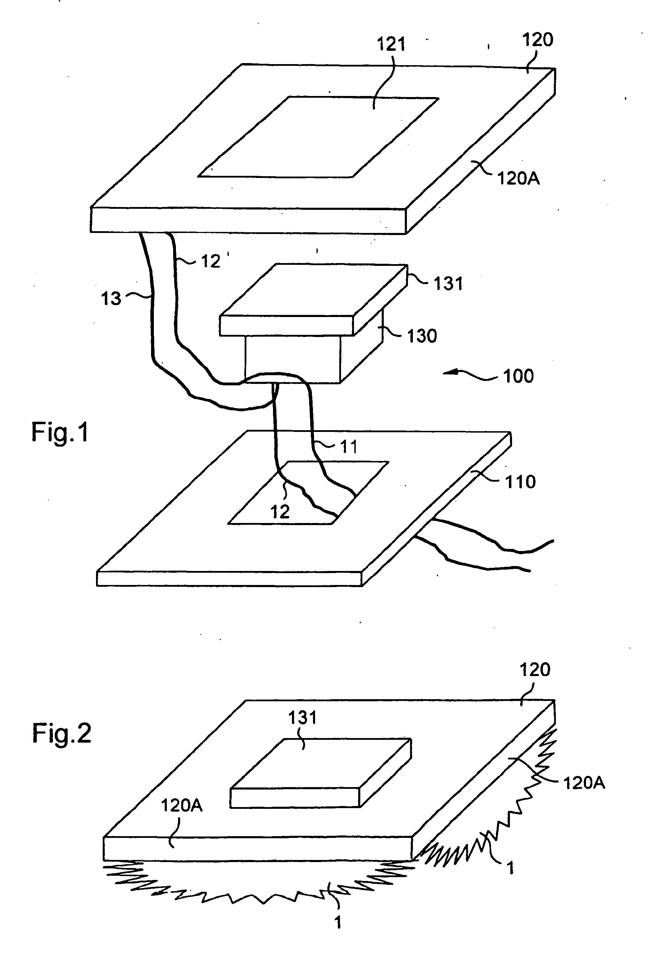

Sur les figures 1 et 2, on a représenté un appareillage électrique 100 présentant une fonction lumineuse notamment pour être visible dans la pénombre ou indiquer à l'usager l'état de fonctionnement dudit appareillage.

Cet appareillage électrique 100 comprend de manière connue en soi un support 110 destiné à être fixé à une boîte à encastrer dans une paroi quelconque, par exemple, une paroi alvéolaire, ou à un boîtier ou encore à une goulotte à rapporter en saillie sur une telle paroi.

Le support 110 sert au montage à l'intérieur de la boîte, du boîtier ou de la goulotte d'un ou plusieurs mécanismes d'appareillage 130, tel qu'un mécanisme d'interrupteur, de prise de courant, de prise de téléphone, de disjoncteur.

Il se présente ici sous la forme d'un cadre plat en matière plastique ou métallique, de forme carrée par exemple.

Le cadre est défini entre un bord périphérique extérieur et un bord périphérique interne qui délimite une ouverture centrale également de forme carrée à l'intérieur duquel est monté le socle du mécanisme d'appareillage 130 correspondant.

L'ouverture centrale du support est destinée à accueillir un ou plusieurs socles de mécanisme d'appareillage.

Ici elle permet d'accueillir un socle deux modules dont la façade de forme carrée remplit la surface de l'ouverture centrale.

Pour le montage de chaque socle de mécanisme d'appareillage 130, l'ouverture centrale du support 110 est bordée sur ses quatre côtés de moyens de montage ici non représentés, par exemple des moyens d'encliquetage.

L'appareillage électrique 100 comporte également une plaque enjoliveur 120 se présentant également sous la forme d'un cadre, de forme carrée, qui entoure au moins une touche de commande 131 accessible à l'usager pour l'actionnement d'au moins un mécanisme d'appareillage, ici le mécanisme d'appareillage 130 supporté par le support 110.

La plaque enjoliveur 120 présente une partie de façade plane bordée par un rebord périphérique 120A qui forme la tranche de celle-ci.

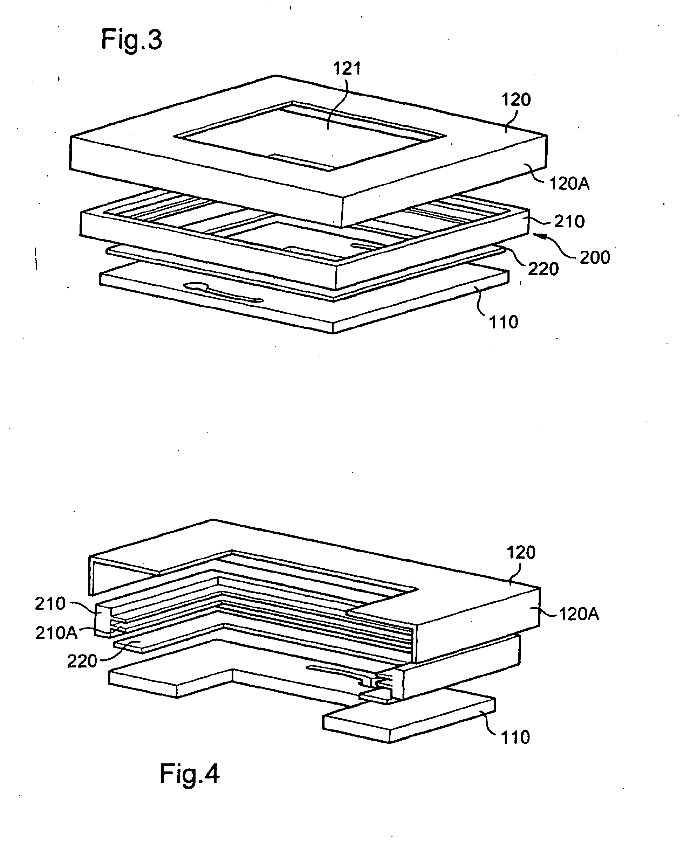

Par ailleurs, l'appareillage électrique 100 comporte des moyens d'éclairement 200 (voir figures 3 à 6) propres à l'éclairage d'une zone de façade dudit appareillage pour que celui-ci soit visible dans la pénombre ou indique à l'usager son état de fonctionnement.

Comme le montrent les figures 3 à 6, selon l'invention, ces moyens d'éclairement 200 sont embarqués sur la plaque enjoliveur 120 et sont adaptés à éclairer la tranche 120A de celle-ci (voir figure 2).

Comme le montre plus particulièrement la figure 2, ces moyens d'éclairement sont agencés de manière à pouvoir former un halot lumineux 1 autour de l'appareillage électrique et plus particulièrement autour de la plaque enjoliveur 120.

Les moyens d'éclairement 200 sont rapportés ici sur la face arrière de ladite plaque enjoliveur (voir figures 3 à 6). Ils sont logés dans l'épaisseur de ladite plaque enjoliveur 120, le rebord périphérique 120A et la partie de façade de ladite plaque enjoliveur formant intérieurement un logement destiné à accueillir lesdits moyens d'éclairement 200.

Ici, préférentiellement, les moyens d'éclairement 200 comprennent une source lumineuse et un guide optique 210 adaptés à guider le flux lumineux émis par la source lumineuse jusqu'à la tranche 120A de ladite plaque enjoliveur 120.

Préférentiellement, la source lumineuse comprend des diodes électroluminescentes (non représentées sur les figures) raccordées à un circuit imprimé supporté par une plaque support 220.

Le guide optique 210 et la plaque support 220 du circuit imprimé auquel sont raccordées les diodes électroluminescentes présentent également une forme de cadre carré adaptée à la forme de la plaque enjoliveur 120.

Avantageusement, le guide optique 210 peut présenter sur sa tranche des stries pour diffuser la lumière.

Il est réalisé en matière plastique moulée comme par exemple du polycarbonate transparent ou du polymétacrylate de méthyle acrylonitrile transparent.

Comme le montre plus particulièrement la figure 4, le guide optique 210 comporte des moyens de montage, ici des moyens de rainure 210A, pour le montage de la plaque support 220 du circuit imprimé.

En outre, le guide optique 210 sur lequel est montée la plaque support 220 de circuit imprimé peut être soudé par ultrasons à la plaque enjoliveur 120 pour former un ensemble très rigide.

Le guide optique 210 est capable de guider la lumière émise par les diodes électroluminescentes pour diffuser cette lumière au travers de la tranche 120A de la plaque enjoliveur et réaliser un halot lumineux 1 autour de cette plaque enjoliveur comme cela est représenté plus particulièrement sur la figure 2.

Selon le mode de réalisation représenté sur la figure 1, le circuit imprimé auquel sont connectées les diodes électroluminescentes peut être alimenté au courant par des conducteurs électriques 12,13 connectés aux bornes de connexion du mécanisme d'appareillage lui-même connecté par des conducteurs électriques 11,12 au réseau d'alimentation électrique.

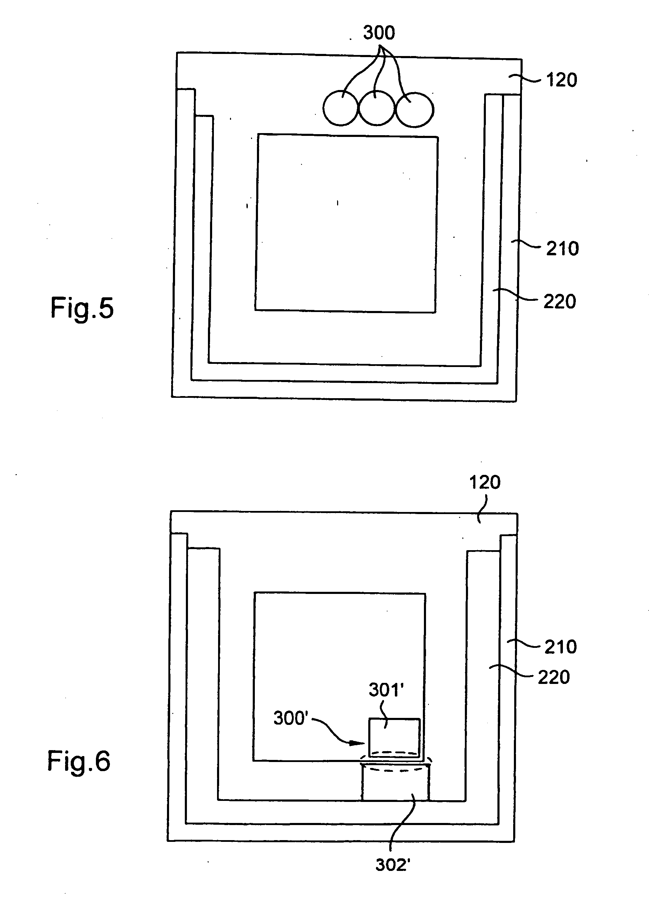

En variante, on peut prévoir d'alimenter en courant ledit circuit imprimé par des accumulateurs d'énergie 300 (des piles) logés dans ladite plaque enjoliveur (voir figure 5). On peut également prévoir comme cela est représenté sur la figure 6 que le circuit imprimé soit alimenté en courant par un système à induction 300' avec un émetteur 301' alimenté en courant via les bornes de connexion du mécanisme d'appareillage 130 et un récepteur 302' logé dans la plaque enjoliveur 120.

Ces deux moyens précités d'alimentation électrique du circuit imprimé sont particulièrement avantageux dans le sens où ils sont au moins pour partie embarqués sur la plaque enjoliveur et permettent une facilité de montage de l'appareillage électrique.

Avantageusement, la partie de façade de la plaque enjoliveur 120 est une partie opaque et ladite plaque enjoliveur comprend une partie arrière translucide formant au moins une partie de la tranche 120A de la plaque enjoliveur.

Cette partie arrière translucide peut être rapportée ou surmoulée sur la face arrière de la partie de façade opaque qui peut s'étendre sur un côté de la plaque enjoliveur de telle sorte que les moyens d'éclairement éclairent trois côtés sur quatre de cette plaque. La partie de façade est avantageusement réalisée en matière métallique tandis que la partie arrière est réalisée en matière plastique moulée, elle peut être encliquetée sur la face arrière de cette partie de façade.

## Revendications

1. Appareillage électrique (100) comprenant une plaque enjoliveur (120) se présentant sous la forme d'un cadre qui entoure au moins une touche de commande (131) accessible à l'usager pour l'actionnement d'au moins un mécanisme d'appareillage, et des moyens d'éclairement (200), propres à l'éclairage d'une zone de façade dudit appareillage, qui comprennent un guide optique (210) embarqué sur la plaque enjoliveur et une source lumineuse, **caractérisé en ce que** ladite source lumineuse est également embarquée sur ladite plaque enjoliveur (120) et le guide optique (210) est agencé pour guider le flux lumineux émis par la source lumineuse jusqu'à la tranche (120A) de ladite plaque enjoliveur (120).

2. Appareillage selon la revendication 1, **caractérisé en ce que** lesdits moyens d'éclairement (200) sont rapportés sur la face arrière de ladite plaque enjoliveur (120).

3. Appareillage selon l'une des revendications 1 ou 2, **caractérisé en ce que** lesdits moyens d'éclairement (200) sont logés dans l'épaisseur de ladite plaque enjoliveur (120).

4. Appareillage électrique selon l'une des revendications précédentes, **caractérisé en ce que** ledit guide optique (210) présente sur sa tranche des stries pour diffuser la lumière.

5. Appareillage selon l'une des revendications précédentes, **caractérisé en ce que** ledit guide optique (210) est réalisé en matière plastique moulée comme du polycarbonate transparent ou du polymétacrylate de méthyle acrylonitrile transparent.

6. Appareillage selon l'une des revendications précédentes, **caractérisé en ce que** ladite source lumineuse comprend des diodes électroluminescentes raccordées à un circuit imprimé.

7. Appareillage selon l'une des revendications précédentes, **caractérisé en ce que** ledit guide optique (210) comporte des moyens de montage (210A) d'une plaque support (220) dudit circuit imprimé.

8. Appareillage selon l'une des revendications 6 ou 7, **caractérisé en ce que** ledit circuit imprimé est alimenté en courant par de conducteurs électriques (12,13) connectés aux bornes de connexion du mécanisme d'appareillage.

9. Appareillage selon l'une des revendications 6 ou 7, **caractérisé en ce que** ledit circuit imprimé est alimenté en courant par des accumulateurs d'énergie (300) logés dans ladite plaque enjoliveur.

10. Appareillage selon l'une des revendications 6 ou 7, **caractérisé en ce que** ledit circuit imprimé est alimenté en courant par un système à induction (300').

11. Appareillage selon l'une quelconque des revendications précédentes, **caractérisé en ce que** ladite plaque enjoliveur (120) comporte une partie de façade opaque et une partie arrière translucide formant au moins une partie de la tranche de la plaque enjoliveur.

12. Appareillage selon la revendication 11, **caractérisé en ce que** la partie arrière translucide est rapportée sur la face arrière de la partie de façade opaque.

13. Appareillage selon la revendication 11, **caractérisé en ce que** la partie arrière translucide est surmoulée sur la partie de façade opaque.

14. Appareillage selon l'une des revendications 11 à 13, **caractérisé en ce que** la partie de façade s'étend sur un côté de la plaque enjoliveur, ladite partie arrière translucide formant les trois autres côtés de ladite plaque enjoliveur.

15. Appareillage selon l'une des revendications 11 à 14, **caractérisé en ce que** ladite partie de façade opaque est réalisé en matière métallique.

16. Appareillage selon l'une des revendications 14 et 15, **caractérisé en ce que** ladite partie arrière est réalisée en matière plastique moulée.

## Claims

1. Electrical equipment (100) comprising a trim plate (120) in the form of a frame surrounding at least one user-accessible control key (131) for actuating at least one equipment mechanism, and lighting means (200) suitable for lighting a zone of the front face of said equipment, the lighting means comprising a light guide (210) incorporated in the trim plate and a light source, the equipment being **characterized in that** said light source is also incorporated in said trim plate (120) and the light guide (210) is arranged to guide the light flux emitted by the light source to the edge face (120A) of said trim plate (120).

2. Equipment according to claim 1, **characterized in that** said lighting means (200) are fitted onto the rear face of said trim plate (120).

3. Equipment according to claim 1 or claim 2, **characterized in that** said lighting means (200) are housed in the thickness of said trim plate (120).

4. Electrical equipment according to any preceding claim, **characterized in that** said light guide (210) presents light-diffusing non-uniformities in its edge face.

5. Equipment according to any preceding claim, **characterized in that** said light guide (210) is made of molded plastics material such as transparent polycarbonate or transparent polymethyl methacrylate.

6. Equipment according to any preceding claim, **characterized in that** said light source comprises light emitting diodes connected to a printed circuit.

7. Equipment according to any preceding claim, **characterized in that** said light guide (210) includes means (210A) for mounting a support plate (220) of said printed circuit.

8. Equipment according to claim 6 or claim 7, **characterized in that** said printed circuit is powered electrically by electrical conductors (12, 13) connected to the connection terminals of the equipment mechanism.

9. Equipment according to claim 6 or claim 7, **characterized in that** said printed circuit is powered electrically by rechargeable batteries (300) housed in said trim plate.

10. Equipment according to claim 6 or claim 7, **characterized in that** said printed circuit is powered electrically by an induction system (300').

11. Equipment according to any preceding claim, **characterized in that** said trim plate (120) includes an opaque front portion and a translucent rear portion forming at least a portion of the edge face of the trim plate.

12. Equipment according to claim 11, **characterized in that** the translucent rear portion is fitted onto the rear face of the opaque front portion.

13. Equipment according to claim 11, **characterized in that** the translucent rear portion is molded onto the opaque front portion.

14. Equipment according to any one of claims 11 to 13, **characterized in that** the front portion extends over one side of the trim plate, said translucent rear portion forming the other three sides of said trim plate.

15. Equipment according to any one of claims 11 to 14, **characterized in that** said opaque front portion is made of metal material.

16. Equipment according to claim 14 or claim 15, **characterized in that** said rear portion is made of molded plastics material.

## Patentansprüche

1. Elektrisches Gerät (100) mit einer Zierblende (120), die die Form eines Rahmens aufweist, der mindestens eine Bedienungstaste (131) umrahmt, die für den Anwender zur Betätigung von mindestens einem Gerätemechanismus zugänglich ist, sowie mit Beleuchtungsmitteln (200) zur Beleuchtung eines Fassadenbereichs des Geräts, die einen eingebauten optischen Leiter (210) auf der Zierblende und eine Lichtquelle umfassen, **dadurch gekennzeichnet, dass** die Lichtquelle ebenfalls auf der Zierblende (120) eingebaut ist und der optische Leiter (210) angeordnet ist, um den von der Lichtquelle abgegebenen Lichtstrom bis zur Kante (120A) der Zierblende (120) zu leiten.

2. Gerät nach Anspruch 1, **dadurch gekennzeichnet, dass** die Beleuchtungsmittel (200) auf die Rückseite der Zierblende (120) aufgesetzt sind.

3. Gerät nach einem der Ansprüche 1 oder 2, **dadurch gekennzeichnet, dass** die Beleuchtungsmittel (200) in der Wandstärke der Zierblende (120) untergebracht sind.

4. Elektrisches Gerät nach einem der vorausgehenden Ansprüche, **dadurch gekennzeichnet, dass** der optische Leiter (210) an seiner Kante Streifen aufweist, um das Licht zu streuen.

5. Gerät nach einem der vorausgehenden Ansprüche, **dadurch gekennzeichnet, dass** der optische Leiter (210) aus einem gussgeformten Kunststoff hergestellt ist, wie durchsichtiges Polycarbonat oder durchsichtiges Acrylonitril-Methylpolymethacrylat.

6. Gerät nach einem der vorausgehenden Ansprüche, **dadurch gekennzeichnet, dass** die Lichtquelle an eine gedruckte Schaltung angeschlossene Leuchtdioden umfasst.

7. Gerät nach einem der vorausgehenden Ansprüche, **dadurch gekennzeichnet, dass** der optische Leiter (210) Montagemittel (210A) für eine Halteplatte (220) der gedruckten Schaltung umfasst.

8. Gerät nach einem der Ansprüche 6 oder 7, **dadurch gekennzeichnet, dass** die gedruckte Schaltung durch elektrische Leitungen (12,13) mit Strom versorgt wird, die an den Anschlussklemmen des Gerätemechanismus angeschlossen sind.

9. Gerät nach einem der Ansprüche 6 oder 7, **dadurch gekennzeichnet, dass** die gedruckte Schaltung durch in der Zierblende untergebrachte Energiespeicher (300) mit Strom versorgt wird.

10. Gerät nach einem der Ansprüche 6 oder 7, **dadurch gekennzeichnet, dass** die gedruckte Schaltung durch ein Induktionssystem (300') mit Strom versorgt wird.

11. Gerät nach einem der vorausgehenden Ansprüche, **dadurch gekennzeichnet, dass** die Zierblende (120) einen lichtundurchlässigen Fassadenbereich und einen lichtdurchlässigen Rückenbereich umfasst, der mindestens einen Teil der Kante der Zierblende bildet.

12. Gerät nach Anspruch 11, **dadurch gekennzeichnet, dass** der lichtdurchlässige Rückenbereich auf die Hinterseite des lichtundurchlässigen Fassadenbereichs aufgesetzt ist.

13. Gerät nach Anspruch 11, **dadurch gekennzeichnet, dass** der lichtdurchlässige Rückenbereich auf den lichtundurchlässigen Fassadenbereich gegossen wird.

14. Gerät nach einem der Ansprüche 11 bis 13, **dadurch gekennzeichnet, dass** sich der Fassadenbereich auf einer Seite der Zierblende erstreckt und der lichtdurchlässige Rückenbereich die drei anderen Seiten der Zierblende bildet.

15. Gerät nach einem der Ansprüche 11 bis 14, **dadurch gekennzeichnet, dass** der lichtundurchlässige Fassadenbereich aus Metall hergestellt ist.

16. Gerät nach einem der Ansprüche 14 und 15, **dadurch gekennzeichnet, dass** der Rückenbereich aus einem gussgeformten Kunststoff hergestellt ist.
